# EUROPÄISCHE PATENTSCHRIFT

(11) **EP 3 186 741 B1**
(45) Veröffentlichungstag und Bekanntmachung des Hinweises auf die Patenterteilung: **17.06.2020**
(21) Anmeldenummer: 15747777.9
(22) Anmeldetag: 29.07.2015
(51) Int. Cl.: G06F 21/44, G06F 21/79

(54) **ZUGRIFFSSCHUTZ FÜR FREMDDATEN IM NICHTFLÜCHTIGEN SPEICHER EINES TOKENS**
ACCESS PROTECTION FOR EXTERNAL DATA IN THE NON-VOLATILE MEMORY OF A TOKEN
PROTECTION D'ACCÈS POUR DES DONNÉES ÉTRANGÈRES DANS LA MÉMOIRE NON VOLATILE D'UN JETON

(30) Priorität: 28.08.2014 DE 102014112347
(43) Veröffentlichungstag der Anmeldung: 05.07.2017
(73) Patentinhaber: Bundesdruckerei GmbH, 10969 Berlin (DE); CV Cryptovision GmbH, 45886 Gelsenkirchen (DE)
(72) Erfinder: MÜLLER, Frank, 10407 Berlin (DE); SCHOLZE, Steffen, 13469 Berlin (DE); SCHWAN, Matthias, 10437 Berlin (DE); HESSE, Danny, 10785 Berlin (DE); FILZHUTH, Elke, 12359 Berlin (DE); WIRTH, Klaus-Dieter, 12683 Berlin (DE); MAI, Thomas, 46236 Bottrop (DE); LOHOFF, Ansgar, 45879 Gelsenkirchen (DE)
(74) Vertreter: Richardt Patentanwälte PartG mbB
(86) Internationale Anmeldenummer: PCT/EP2015/067342
(87) Internationale Veröffentlichungsnummer: WO 2016/030110

(56) Entgegenhaltungen:
- US-A1- 2009 261 172
- US-A1- 2012 102 334
- global platform: "GlobalPlatform Key Management System Functional Requirements", , 1. November 2003 (2003-11-01), XP055150149, Gefunden im Internet: URL:https://www.globalplatform.org/ [gefunden am 2014-10-31]
- Anonymous: "Smart card - Wikipedia", , 12 August 2014 (2014-08-12), XP055474080, Retrieved from the Internet: URL:https://en.wikipedia.org/wiki/w/index. php?title=Smart_card&oldid=620909318 [retrieved on 2018-05-09]
- Tübingen Universität: "ANleitung zur Verschlüsselung von Datenträgern mit TrueCrypt", , 17 April 2012 (2012-04-17), XP055472187, Retrieved from the Internet: URL:https://web.archive.org/web/2012041707 1347if_/http://www.jura.uni-tuebingen.de:8 0/einrichtungen/cz/veranstaltungen/TrueCry pt.pdf [retrieved on 2018-05-02]

## Beschreibung

### Technisches Gebiet

Die Erfindung betrifft ein Verfahren zum Zugriffsschutz für Fremddaten im nichtflüchtigen Speicher eines Tokens in Bezug auf eine externe Schnittstelle des Tokens.

### Stand der Technik

Aus dem Stand der Technik sind Verfahren zur Speicherung von Fremddaten auf Token bekannt. Als Fremddaten werden dabei Daten bezeichnet, deren Vorhandensein auf dem Token nicht auf den besonderen Möglichkeiten des Kartenherausgebers beruht. Solche Fremddaten müssen nicht vom Kartenherausgeber angelegt sein, sondern können auch von einem unter diesem Blickwinkel "fremden" Urheber stammen. Insbesondere können Fremddaten in der Art von fremd verifizierten Attributen oder fremd erstellten Applikationen ausgestaltet sein.

Die Druckschrift DE 10 2009 041 924 A1 offenbart ein Verfahren zum Installieren und Konfigurieren von fremden Applikationen in einem portablen Datenträger, der auch als Chipkarte realisiert sein kann. Dieses Verfahren sieht insbesondere vor, den Applikationen unterschiedliche Privilegien zuzuweisen, um eine Sicherheitsinfrastruktur bereit zu stellen.

Aus der Druckschrift US 6,257,486 B1 sind eine Vorrichtung und ein Verfahren zum Lesen eines als Smartcard realisierten ID-Tokens bekannt, wobei die Smartcard Attribute speichert und einem Nutzer zugeordnet ist. Die Smartcard beinhaltet ferner ein Tastenfeld, um dem Benutzer die Eingabe einer PIN zu ermöglichen.

Aus der Druckschrift DE 10 2008 000 067 A1 ist ein Verfahren zum Lesen eines in einem ID-Token gespeicherten Attributs bekannt, wobei der ID-Token einem Inhaber persönlich zugeordnet ist, mit Schritten zur Authentifizierung des Inhabers gegenüber dem ID-Token, zur Authentifizierung eines ID-Providers gegenüber dem ID-Token, zum Lesezugriff des ersten ID-Providers auf das Attribut und zur Übertragung des Attributs an ein zweites Computersystem eines Dienstanbieters.

Die Veröffentlichung "GlobalPlatform Key Management System Functional Requirements", Version 1.0, November 2003 beschreibt Anforderungen an ein System zur Verwaltung kryptographischer Schlüssel für Chipkarten.

Die Druckschrift US 2012/102334 A1 beschreibt ein Asset-Management-System, das ein Hardware-Modul umfasst, das als ein Asset-Steuerungskern betrieben wird. Der Asset-Steuerungskern umfasst im Allgemeinen einen kleinen Hardware-Kern, der in einem Zielsystem auf einem Chip eingebettet ist und einen hardwarebasierten Vertrauenspunkt auf dem Silizium-Die bildet. Der Asset-Steuerungskern kann als Vertrauensanker auf einem Verbrauchergerät verwendet werden, indem er Merkmale aufweist, die schwer zu manipulieren sind. Der Asset-Steuerungskern ist in der Lage, eine eindeutige Kennung für ein Gerät zu generieren und am Nachverfolgen und Ausstatten des Gerätes über einen sicheren Kommunikationskanal mit einer Anwendung teilzunehmen.

Die Druckschrift US 2009/261172 A1 beschreibt Systeme, Verfahren und Computerprogrammprodukte zum Unterstützen mehrerer kontaktloser Anwendungen unter Verwendung verschiedener Sicherheitsschlüssel auf einer drahtlosen intelligenten Vorrichtung. Gemäß einem Aspekt umfasst der hierin beschriebene Gegenstand ein Verfahren zum Unterstützen mehrerer kontaktloser Anwendungen unter Verwendung verschiedener Sicherheitsschlüssel auf einer drahtlosen intelligenten Vorrichtung. Das Verfahren umfasst bei einer drahtlosen intelligenten Vorrichtung, die dazu konfiguriert ist, mit einem drahtlosen Lesegerät zu kommunizieren, wobei die drahtlose Vorrichtung eine Mehrzahl von kontaktlosen Anwendungen und einen kontaktlosen Anwendungsspeicher zur Verwendung durch die Vielzahl von kontaktlosen Anwendungen umfasst, wobei ein Teil des Speichers derart initialisiert wird, dass ein Zugriff auf den Teil des Speichers die Verwendung eines gemeinsamen geheimen Schlüssels erfordert, der der Vielzahl von kontaktlosen Anwendungen bekannt ist.

Mit den bekannten Verfahren und Vorrichtungen wäre ein Zugriffsschutz für Fremddaten zwar prinzipiell durch Metadaten zur Beschreibung der jeweiligen Zugriffsbeschränkungen möglich. Diese Metadaten müssten einerseits innerhalb der Fremddaten gespeichert und andererseits durch das Betriebssystem oder eine privilegierte Anwendung des Tokens verarbeitet werden. Damit würde allerdings ein Grundsatz in der Sicherheitsarchitektur der gebräuchlichen Token durchbrochen, wonach Fremddaten für das Betriebssystem und die privilegierten Anwendungen der Token opak sein müssen. Demnach besteht ein Bedarf an Implementierungen für den Zugriffsschutz von Fremddaten unter Einhaltung der gebräuchlichen Sicherheitsarchitektur von Token.

### Zusammenfassung der Erfindung

Die sich aus dem vorangehend beschrieben Bedarf ergebende Aufgabe wird unter verschiedenen Aspekten grundlegend mit den Merkmalen der unabhängigen Ansprüche gelöst. Weiterbildungen und Ausgestaltungen dieser grundlegenden Lösungen sind in den jeweils abhängigen Ansprüchen angegeben.

Grundlegend vorgeschlagen wird ein Verfahren zum Zugriffsschutz für Fremddaten im nichtflüchtigen Speicher eines Tokens in Bezug auf eine externe Schnittstelle des Tokens, umfassend das Durchführen eines Protokolls zwischen dem Token und einem Fremddaten-Anbieter-Computer zur gegenseitigen Authentifizierung über die externe Schnittstelle, das Übertragen eines kryptografischen Sektoridentifikators von dem einem Fremddaten-Anbieter-Computer an den Token über die externe Schnittstelle, das Erzeugen eines temporären Schlüssels aus dem übertragenen kryptografischen Sektoridentifikator durch den Token, das Übertragen von Fremddaten von dem einem Fremddaten-Anbieter-Computer über die externe Schnittstelle zur Speicherung in dem nichtflüchtigen Speicher, sowie das Verschlüsseln der Fremddaten mit dem temporären Schlüssel durch den Token und Speichern der verschlüsselten Fremddaten in dem nichtflüchtigen Speicher.

Der Begriff "Token" bezeichnet vorliegend jegliche Realisierung eines tragbaren Microcomputers mit einer externen Schnittstelle zum Austausch von Daten mit einem externen Gerät, einem Prozessor und einem nichtflüchtigen Speicher, der mittelbar über die externe Schnittstelle einer äußeren Lese- und/oder Schreiboperation zugänglich ist.

Unter einem "Token" wird hier insbesondere ein tragbares elektronisches Gerät verstanden, welches zumindest einen geschützten elektronischen Datenspeicher zur Speicherung von Daten und eine Kommunikations-Schnittstelle zum Auslesen der Daten aufweist. Der Speicherbereich ist geschützt, um zu verhindern, dass das in dem Speicherbereich gespeicherte Daten in unerlaubter Weise verändert oder ohne die dafür erforderliche Berechtigung ausgelesen wird. Mit anderen Worten kann auf den Speicherbereich nur dann zugegriffen werden, wenn eine hierzu erforderliche Zugriffberechtigung gegeben ist.

Der Token kann eine Kommunikationsschnittstelle aufweisen und einen Mikroprozessor, der über einen internen Datenbus mit dem geschützten Speicherbereich verbunden ist. Ein externer Zugriff auf den geschützten Speicherbereich über die Kommunikationsschnittstelle kann nur über den Prozessor erfolgen, nachdem der Prozessor durch Ausführung eines Programms das Vorliegen der entsprechenden Zugriffberechtigung geprüft hat.

Insbesondere kann es sich bei dem Token um einen USB-Stick, eine Chipkarte oder ein anderes Secure Element (SE), wie beispielsweise von Global Platform (www.globalplatform.org) spezifiziert, handeln oder um ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise wie Zugangskarten, in die ein Datenspeicher zur Speicherung von Daten integriert ist. Insbesondere kann es sich bei dem ID-Token um ein Machine-Readable Travel Document, wie beispielsweise von der Internationalen Luftfahrtbehörde (ICAO) und/oder dem Bundesamt für Sicherheit in der Informationstechnik (BSI) standardisiert, handeln.

Der Begriff "externe Schnittstelle" wird hinsichtlich eines Tokens verwendet für jede technische Einrichtung zum Austausch von digital codierten Daten zwischen dem Token und einer davon getrennten Datenverarbeitungseinrichtung. Beispiele für externe Schnittstellen eines Tokens sind die aus den Bank- und Kreditkarten bekannten Kontaktfelder und die aus den Bereich der elektronischen Ausweisdokumente bekannten RFID-Schnittstellen zur hochfrequenten drahtlosen Signalübertragung. Der Begriff "Fremddaten" wird verwendet für digital im nicht-flüchtigen Speicher eines Tokens codierte Inhalte, die anders als alle ursprünglich und unveränderlich in dem Token gespeicherten Stammdaten nicht unmittelbar die Vertrauensstellung des Kartenherausgebers genießen. Die Realisierung von Fremddaten setzt voraus, dass wenigstens ein Teil des nichtflüchtigen Speichers des Tokens noch nach deren Ausstellung und Herausgabe an den Inhaber über eine externe Schnittstelle beschreibbar ist. Fremddaten können insbesondere Applikationen und Fremdattribute sein. Fremdattribute können unter Umständen einen bequemen Weg bieten, um anonyme oder pseudonyme Zusicherungen im digitalen Geschäftsverkehr zu verwirklichen. Beispielsweise kann eine Bonitätsbewertung des Inhabers des Tokens durch kryptografisch verifizierbare Fremddaten über den nichtflüchtigen Speicher des Tokens an autorisierte Abnehmer übergeben werden. Auf diese Art kann eine Anfrage bei einer Wirtschaftsauskunftei über die als Stammdaten gespeicherten persönlichen Daten des Inhabers des Tokens vermieden werden.

Der Begriff "Fremddaten-Anbieter" wird verwendet für einen Datenverarbeitungsdienst, der durch datentechnische Mittel dem Inhaber eines Tokens digitale Inhalte als Fremddaten zur Speicherung auf dem Token zur Verfügung stellt. Der Begriff "Fremddaten-Anbieter-Computer" wird verwendet für eine Datenverarbeitungseinrichtung, die den als Fremddaten-Anbieter bezeichneten Datenverarbeitungsdienst ausführt oder zu dessen Ausführung eingerichtet ist.

Der Begriff "Fremddaten-Verwender" wird verwendet für einen Datenverarbeitungsdienst, der durch datentechnische Mittel aus einem Token digitale Inhalte als Fremddaten abruft. Regelmäßig wird der Abruf der Fremddaten ein Bestandteil eines umfangreicheren datentechnisch ausgeführten Protokolls sein. Beispielsweise kann der Abruf der Fremddaten innerhalb einer Transaktion erfolgen. Mit dem Begriff "Transaktion" wird eine zusammenhängende Folge von Datenverarbeitungsvorgängen zur Abbildung eines Rechtsgeschäfts, Geschäftsvorfalls oder einer ähnlichen vorübergehenden realen Austauschbeziehung bezeichnet. Bekannte Beispiele für Transaktionen sind online und insbesondere über das Internet ausgeführte Rechtsgeschäfte, insbesondere Bestellungen, Buchungen, Reservierungen und Banküberweisungen von Konsumenten. Beispiele für Transaktionen, die keine Rechtsgeschäfte abbilden, sind die Teilnahme an unverbindlichen Online-Spielen oder Verlosungen, der Versand von Emails sowie das Einstellen von Dateien in Online-Speicherdienste. Außerdem kann eine Transaktion einen Teilvorgang in einer Freischaltung oder Inbetriebnahme von persönlichen Mietgegenständen bilden, beispielsweise im Rahmen der Entsperrung von Mietfahrzeugen oder Schließfächern. Der Begriff "Fremddaten-Verwender-Computer" bezeichnet eine Datenverarbeitungseinrichtung, die den als Fremddaten-Verwender bezeichneten Datenverarbeitungsdienst ausführt oder zu dessen Ausführung eingerichtet ist.

Da sich die vorangehenden Definitionen auf die von den betreffenden Teilnehmern und Computern bereitgestellten Beiträge und Funktionen beziehen, ist durch die getroffene Unterscheidung oder Abgrenzung nicht ausgeschlossen, dass mehrere dieser datentechnischen Dienste oder Einrichtungen in einem System zusammengefasst oder verwirklicht sind.

Ein möglicher Vorteil des vorangehend definierten grundlegenden Verfahrens kann darin gesehen werden, dass es zugriffsgesteuerte Verwendung von Fremddaten auch in Token ermöglicht, deren Dateisystem keinen Zugriffschutz umfasst. Dabei können die dynamisch aus typisch vorhandenem kryptografischen Inventar erzeugten Schlüssel einen Speicher-Overhead für die Zugriffssteuerung vermeiden.

In einer eigenständigen Ausgestaltung des vorangehend definierten Verfahrens wird ferner die Gültigkeit des kryptografischen Sektoridentifikators durch den Token als Voraussetzung für dessen Verarbeitung bei der Erzeugung des temporären Schlüssels geprüft.

Ein möglicher Vorteil dieser Ausgestaltung kann darin gesehen werden, dass die Nutzung der Fremddaten nur für vorgegebene gültige Sektoridentifikatoren möglich ist. Soweit der Algorithmus zur Prüfung der Sektoridentifikatoren vom Herausgeber des Tokens festgelegt wird, steht damit ein Weg zur Begrenzung der Menge der gültigen Sektoridentifikatoren zur Verfügung. Auch aus der Sicht des Nutzers des Tokens kann eine solche Beschränkung als vorteilhaft angesehen werden. Dadurch kann unter anderem vermieden werden, dass über die Speicherung von Fremddaten ein vom Nutzer nicht kontrollierbarer Austausch von Informationen zum Zweck der Markierung der Nutzung des betreffenden Tokens in der Art von "Cookies" realisiert wird.

In einer weiteren, eigenständigen Ausgestaltung der vorangehend definierten Verfahren wird ferner durch den Token eine Prüfsumme der übertragenen Fremddaten berechnet und in Zuordnung zu den verschlüsselten Fremddaten gespeichert.

Der Begriff "Prüfsumme" ist dabei umfassend zu verstehen und bezeichnet dabei sowohl einfache als auch aufwendige Verfahren zur approximativen Gewährleistung von Datenintegrität. Bekannte Beispiele von Prüfsummen sind Paritätsbits, Quersummen, zyklische Redundanzprüfung (engl.: Cyclic Redundancy Check, CRC) und Hashwerte.

Ein möglicher Vorteil dieser Ausgestaltung kann darin gesehen werden, dass eine Übereinstimmung in der Prüfsumme sowohl die zutreffende Entschlüsselung als auch die einwandfreie Speicherung der Fremddaten erkennen lässt.

Eine weitere, eigenständige Ausgestaltung der vorangehend definierten Verfahren umfasst ferner das Durchführen eines Protokolls zwischen dem Token und einem Fremddaten-Verwender-Computer zur gegenseitigen Authentifizierung über die externe Schnittstelle, das Übertragen einer Leseanfrage und eines kryptografischen Sektoridentifikators von dem Fremddaten-Verwender-Computer an den Token über die externe Schnittstelle, das Verifizieren der Gültigkeit des übertragenen kryptografischen Sektoridentifikators durch den Token als Voraussetzung für dessen Verarbeitung, das Erzeugen eines temporären Schlüssels aus dem kryptografischen Sektoridentifikators durch den Token, das Lesen der durch die Leseanfrage bezeichneten Fremddaten aus dem nichtflüchtigen Speicher, das Entschlüsseln der Fremddaten mit dem temporären Schlüssel durch den Token und das Übertragen der entschlüsselten Fremddaten an den Fremddaten-Verwender-Computer über die externe Schnittstelle.

In einer weiteren, eigenständigen Ausgestaltung der vorangehend definierten Verfahren wird ferner als Voraussetzung für die Übertragung der Fremddaten an den Fremddaten-Verwender-Computer nach dem Lesen und Entschlüsseln der Fremddaten daraus eine Prüfsumme berechnet und deren Übereinstimmung mit der in der Zuordnung zu den Fremddaten gespeicherten Prüfsumme festgestellt.

Ein möglicher Vorteil dieser Ausgestaltung kann darin gesehen werden, dass eine festgestellte Übereinstimmung in der Prüfsumme nicht nur die einwandfreie Speicherung der Fremddaten erkennen lässt, sondern auch deren korrekte Entschlüsselung. Dementsprechend kann ein im vorliegenden Sinne unberechtigter Zugriff mit einem zur Erzeugung des richtigen temporären Schlüssels ungeeigneten Sektoridentifikators auf der Seite des Tokens erkannt werden. Diese Information kann beispielsweise zur Implementierung eines typischen Rückgabeverhaltens einer Zugriffssteuerung genutzt werden, indem bei fehlender Übereinstimmung in der Prüfsumme ein Code zur Anzeige eines Lesefehlers über die Schnittstelle zurückgegeben wird. Zusätzlich oder alternativ kann die Information für einen Fehlzugriffszähler genutzt werden.

In einer weiteren, eigenständigen Ausgestaltung der vorangehend definierten Verfahren ist ferner der kryptografische Sektoridentifikator ein Schlüssel eines symmetrischen Verfahrens.

In einer weiteren, eigenständigen Ausgestaltung der vorangehend definierten Verfahren ist ferner die Leseanfrage unspezifisch und Fremddaten werden an den Fremddaten-Verwender-Computer nur insoweit übertragen, wie die Bedingung an die Prüfsumme erfüllt ist. Eine in diesem Sinne unspezifische Abfrage bezieht sich auf sämtliche im nichtflüchtigen Speicher des Tokens gespeicherten Fremddaten. Ein möglicher Vorteil dieser Ausgestaltung kann darin gesehen werden, dass auch bei einer unspezifischen Leseanfrage alle über die externe Schnittstelle zurück gelieferten Fremddaten mit den ursprünglich geschriebenen übereinstimmen. Es werden keine unverwertbaren Daten zurück geliefert, die ggf. auf der Seite des Empfängers durch eine entsprechende Filterung unterdrückt werden müssten. Auch darin kann eine weitergehende Annäherung an das typische Rückgabeverhalten einer Zugriffsteuerung gesehen werden.

In einer weiteren, eigenständigen Ausgestaltung der vorangehend definierten Verfahren wird ferner der temporäre Schlüssel durch eine kryptografische Einwegoperation und insbesondere einem Diffie-Hellman-Schlüsselerzeugungsverfahren aus dem übertragenen kryptografischen Sektoridentifikator und einem geheimen Schlüssel des Tokens erzeugt.

Ein möglicher Vorteil dieser Ausgestaltung kann darin gesehen werden, dass in vielen Token Diffie-Hellman-Schlüsselerzeugungsverfahren implementiert sind und durch deren Nutzung zusätzlicher Aufwand für die Implementierung alternativer Verfahren vermieden werden kann.

In einer Ausgestaltung des vorangehend definierten Verfahrens ist ferner der kryptografische Sektoridentifikator ein privater Schlüssel eines asymmetrischen Schlüsselpaars, der unverändert als temporärer Schlüssel verwendet wird

Grundlegend vorgeschlagen wird ferner ein Token mit einer externen Schnittstelle, weiterhin aufweisend einen nichtflüchtigen Speicher und Einrichtungen zum Zugriffsschutz auf darin enthaltene Fremddaten, wobei diese Einrichtungen ausgebildet sind zum Durchführen eines Protokolls zum Aufbau einer gegenseitig authentifizierten Verbindung über die externe Schnittstelle, zum Empfangen eines kryptografischen Sektoridentifikators über die gegenseitig authentifizierte Verbindung, zum Erzeugen eines temporären Schlüssels aus dem kryptografischen Sektoridentifikator, zum Empfangen von Fremddaten zur Speicherung in dem nichtflüchtigen Speicher über die gegenseitig authentifizierte Verbindung und zum Verschlüsseln der Fremddaten mit dem temporären Schlüssel und Speichern der verschlüsselten Fremddaten in dem nichtflüchtigen Speicher.

In einer Ausgestaltung des vorangehend definierten Tokens sind darin Einrichtungen zum Verifizieren der Gültigkeit des empfangenen kryptografischen Sektoridentifikators als Voraussetzung für dessen Verarbeitung enthalten.

In einer weiteren, eigenständigen Ausgestaltung des vorangehend definierten Tokens sind darin Einrichtungen zum Berechnen einer Prüfsumme in funktionalem Zusammenhang mit der Verschlüsselung von Fremddaten und zum Speichern der Prüfsumme in Zuordnung zu der Speicherung der Fremddaten enthalten.

In einer weiteren, eigenständigen Ausgestaltung des vorangehend definierten Tokens sind darin Einrichtungen enthalten zum Empfangen einer Leseanfrage über die gegenseitig authentifizierte Verbindung, zum Lesen der durch die Leseanfrage bezeichneten Fremddaten aus dem nichtflüchtigen Speicher, zum Entschlüsseln der Fremddaten mit dem temporären Schlüssel durch den Token und zum Übertragen der entschlüsselten Fremddaten über die gegenseitig authentifizierte Verbindung.

In einer weiteren, eigenständigen Ausgestaltung des vorangehend definierten Tokens sind darin Einrichtungen enthalten, mit denen als Voraussetzung für die Übertragung der Fremddaten über die gegenseitig authentifizierte Verbindung nach dem Lesen und Entschlüsseln der Fremddaten daraus eine Prüfsumme berechnet und deren Übereinstimmung mit der in der Zuordnung zu den Fremddaten gespeicherten Prüfsumme festgestellt wird.

In einer weiteren, eigenständigen Ausgestaltung des vorangehend definierten Tokens wird darin der temporäre Schlüssel durch eine kryptografische Einwegoperation aus dem empfangenen kryptografischen Sektoridentifikator und einem geheimen Schlüssel des Tokens erzeugt.

### Figuren

Exemplarische Vorrichtungen und Verfahren zur Installation von Applikationen im nichtflüchtigen Speicher eines Tokens sind in den anhängenden Zeichnungen veranschaulicht. Darin zeigen:
Fig. 1 ein exemplarisches Datenverarbeitungssystem zur Verwirklichung von zugriffsgesteuerten Schreib- und Leseoperationen in Fremddaten eines Tokens;
Fig. 2 ein exemplarisches Verfahren zum Zugriffsschutz für Fremddaten beim Schreiben in den nichtflüchtigen Speicher eines Tokens; und
Fig. 3 ein exemplarisches Verfahren zur zum Zugriffsschutz für Fremddaten beim Lesen in den nichtflüchtigen Speicher eines Tokens.

### Beschreibung exemplarischer Realisierungen

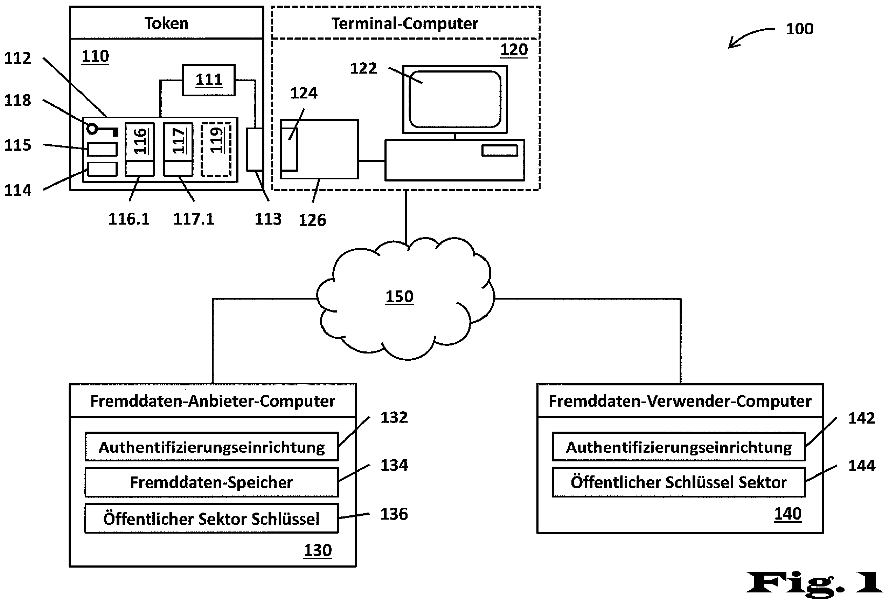

Gemäß Fig. 1 umfasst ein exemplarisches Datenverarbeitungssystem 100 einen Token 110, beispielsweise eine Chipkarte, einen Terminal-Computer 120, einen Fremddaten-Anbieter-Computer 130 und einen Fremddaten-Verwender-Computer 140.

Der Token 110 umfasst in an sich bekannter Weise einen Prozessor 111 und einen nichtflüchtigen Speicher 112. Der nichtflüchtige Speicher 112 kann beispielsweise als Flash- oder EEPROM-Speicher ausgeführt sein. Eine externe Schnittstelle 113 ermöglicht den Austausch von Daten zwischen dem Prozessor 111 und einem entsprechend eingerichteten Gerät außerhalb des Tokens 110. Die externe Schnittstelle 113 kann in an sich bekannter Weise als Kontaktblock an der Oberfläche des Tokens angelegt sein, um einen leitungsgebundenen Austausch von Daten in einem typisch seriellen Protokoll zu ermöglichen. Alternativ kann die externe Schnittstelle 113 als RFID-Transceiver ausgestaltet sein, um den Austausch von Daten über ein Funkübertragungsprotokoll zu erlauben. Beides ist aus dem Stand der Technik bekannt.

In einem Teil des nichtflüchtigen Speichers 112 sind in der exemplarischen Situation ein Betriebssystem 114 und eine privilegierte Applikation 115 enthalten. Bei dem Betriebssystem kann es sich um ein typisches Chipkarten-Betriebssystem handeln wie beispielsweise Java® Card Runtime Environment (JCRE) oder STARCOS. Das Betriebssystem 114 stellt in an sich bekannter Weise die grundlegenden Funktionen für die Verwendung des Tokens 110 bereit. Ein Teil dieser Funktionen betrifft insbesondere den Aufbau einer vorzugsweise gegenseitig authentifizierten und wiederum vorzugsweise kryptografisch geschützten Datenverbindung über die externe Schnittstelle 113. In der exemplarischen Situation wird davon ausgegangen, dass die Authentifizierung durch ein Challenge-Response-Protokoll vorgenommen wird.

Die privilegierte Applikation 115 ist dazu eingerichtet, die Funktionalität des Betriebssystems um eine Möglichkeit zur Installation von Fremddaten zu ergänzen. Dazu verfügt die privilegierte Anwendung über Mittel zum Prüfen der Gültigkeit eines kryptografischen Sektoridentifikators, die in der exemplarischen Situation als (öffentlicher) Prüfschlüssel 118 eines digitalen Signaturalgorithmus implementiert sind. Weiterhin kann die privilegierte Applikation 115 dazu eingerichtet sein, einen temporären Schlüssel zum Verschlüsseln von Fremddaten durch eine kryptografische Einwegoperation und insbesondere durch ein Diffie-Hellman-Schlüsselerzeugungsverfahren aus einem in dem Token dauerhaft gespeicherten Geheimnis und einem über die externe Schnittstelle 113 empfangenen kryptografischen Sektoridentifikator.

Die vorangehend festgelegte Grenze zwischen dem Betriebssystem 114 und der privilegierten Applikation 115 mag künstlich erscheinen. Natürlich sind Realisierungen des Tokens 110 vorstellbar, in denen das Betriebssystem bereits die vorliegend exemplarisch von der privilegierten Applikation bereitgestellten Funktionen umfasst. In einem weiteren Teil des nichtflüchtigen Speichers 112 sind Fremddaten 116, 117 enthalten. Diese Fremddaten 116, 117 können vom Herausgeber des Tokens 110 bereits im Zusammenhang mit der Herstellung des Tokens 110 angelegt oder durch einen Nutzer später installiert worden sein.

Die privilegierte Applikation 115 und die davon verwalteten Fremddaten 116, 117 können im nichtflüchtigen Speicher 112 innerhalb eines hierarchischen Dateisystems organisiert sein, wie dies aus dem Stand der Technik bekannt ist. Dann wäre typisch die privilegierte Applikation 115 in einem übergeordneten Verzeichnis angelegt, das darunterliegend jeweils ein Verzeichnis mit den Fremddaten 116 bzw. 117 enthält. Der übrige Teil 119 des nichtflüchtigen Speichers 112 ist in der exemplarischen Situation nicht belegt und kann vom Nutzer des Tokens 110 zur Speicherung von weiteren Fremddaten verwendet werden.

Der Terminal-Computer 120 ist zunächst dazu eingerichtet, dem Token 110 eine Möglichkeit zum Austausch von Daten mit dem Zertifizierungsstellen-Computer 140 sowie dem Anbieter-Computer und/oder dem Distributor-Computer 150 zu vermitteln.

In der exemplarischen Situation umfasst der Terminal-Computer 120 neben den gebräuchlichen Mitteln zur Speicherung und Verarbeitung digitaler Daten weiterhin eine Schnittstelle 124 zur Kommunikation mit dem Token 110 über deren vorangehend beschriebene externe Schnittstelle 113. Die Schnittstelle 124 des Terminal-Computers 120 ist gemäß der vorliegend exemplarisch gewählten bevorzugten Ausgestaltung in einem separaten Lesegerät 126 eingebaut. Die vom Lesegerät 126 bereitgestellte Verbindung zum persönlichen Computer 122 des Nutzers vermittelt dem Token 110 eine Möglichkeit zur Kommunikation über das Netzwerk 160. Das Lesegerät 126 kann insbesondere als vertrauenswürdige Hardware ausgestaltet sein und beispielsweise Mittel zum Schutz dieser Kommunikation enthalten. Dies ist aus dem Stand der Technik bekannt und wird deswegen nicht im Einzelnen beschrieben.

Weiterhin weist der Terminal-Computer 120 in einer bevorzugten Ergänzung eine Erfassungseinrichtung für eine Authentifizierung des Nutzers gegenüber dem Token 110 auf, die insbesondere als Tastatur zur Eingabe einer PIN oder einer vergleichbaren Kennung in baulicher Einheit mit dem Lesegerät 126 bereit gestellt ist. Diese Maßnahme zur Erschwerung einer missbräuchlichen Benutzung des Tokens 110 durch einen Dritten ist aus dem Stand der Technik gut bekannt und wird hier nicht weiter detailliert dargestellt.

Schließlich ist der Terminal-Computer 120 dazu eingerichtet, auf eine Eingabe eines Nutzers hin eine Anforderung für die Speicherung von Fremddaten auf dem Token 110 zu erzeugen und über das Netzwerk 160 an den Fremddaten-Anbieter-Computer 130 zu übertragen. Vorzugsweise umfasst der Terminal-Computer 120 dazu einen mit dem Netzwerk 150 verbundenen persönlichen Computer 122 des Nutzers. In einem typischen Anwendungsfall kann der persönliche Computer 122 insbesondere mit einem Webbrowser oder einem vergleichbaren Benutzerprogramm ausgerüstet sein, das zur Interaktion mit einem entfernten Computer über das Netzwerk 150 geeignet ist.

Der Fremddaten-Anbieter-Computer 130 ist dazu eingerichtet, über eine Verbindung zu dem Netzwerk 150 auf eine Anforderung zur Lieferung von Fremddaten zur Speicherung auf dem Token 110 zu empfangen, die mit der Anfrage bezeichneten Fremddaten bereitzustellen und die bereit gestellten Fremddaten über die Verbindung zu dem Netzwerk 150 und dem Terminal-Computer 120 an den Token 110 auszuliefern.

Dazu umfasst der Fremddaten-Anbieter-Computer 130 neben den gebräuchlichen Einrichtungen und Ausrüstungen zur Speicherung und Verarbeitung digitaler Daten weiterhin Authentifizierungseinrichtungen 132 zum Aufbau einer vorzugsweise gegenseitig authentifizierten und wiederum vorzugsweise kryptografisch geschützten Datenverbindung zu dem Token 110. In der exemplarischen Situation wird davon ausgegangen, dass die Authentifizierung durch ein Challenge-Response-Protokoll vorgenommen wird. Dementsprechend können die Authentifizierungseinrichtungen 132 in der programmtechnischen Einrichtung des Prozessors 111 für die Durchführung dieses Protokolls gesehen werden. Außerdem kann der Fremddaten-Anbieter-Computer 130 mit Einrichtungen zur Bereitstellung der Fremddaten ausgerüstet sein. Im einfachsten Fall kann es sich dabei um einen Fremddaten-Speicher 134 handeln.

Außerdem kann der Fremddaten-Anbieter-Computer 130 in der exemplarischen Ausgestaltung über Mittel zum Nachweis der Zughörigkeit zu einem vorgegebenen Sektor verfügen. Insbesondere kann es sich dabei um den öffentlichen Schlüssel dieses Sektors 136 handeln.

Der Fremddaten-Verwender-Computer 140 ist dazu eingerichtet, die Anforderung des Nutzers für eine Transaktion über das Netzwerk 150 von dem Terminal-Computer 120 zu empfangen und zu verarbeiten. Dazu umfasst der Fremddaten-Verwender-Computer 140 zunächst die gebräuchlichen und bekannten Einrichtungen und/oder Ausrüstungen zur Speicherung und Verarbeitung digitaler Daten, die vorliegend insbesondere zum Übermitteln einer Anforderung zum Lesen der Fremddaten 113 aus dem Speicher 112 des Tokens 110 über das Netzwerk 150, den Terminal-Computer 120 und die externe Schnittstelle 113 ausgestaltet sein können. Dies schafft die grundsätzliche Möglichkeit, im Zusammenhang mit der vom Nutzer angeforderten Transaktion Fremddaten 116, 117 aus dem Speicher 112 des vom Nutzer für die Transaktion bereit gestellten Tokens 110 auszulesen.

Weiterhin kann der Fremddaten-Verwender-Computer 140 für diese Zwecke über Authentifizierungseinrichtungen 142 verfügen zum Aufbau einer vorzugsweise gegenseitig authentifizierten und wiederum vorzugsweise kryptografisch geschützten Datenverbindung zu dem Token 110.

Außerdem ist der Fremddaten-Verwender-Computer 140 in der exemplarischen Ausgestaltung mit Einrichtungen zum Nachweis der Zughörigkeit zu einem vorgegebenen Sektor ausgestattet. Insbesondere kann es sich dabei um den öffentlichen Schlüssel dieses Sektors 144 handeln.

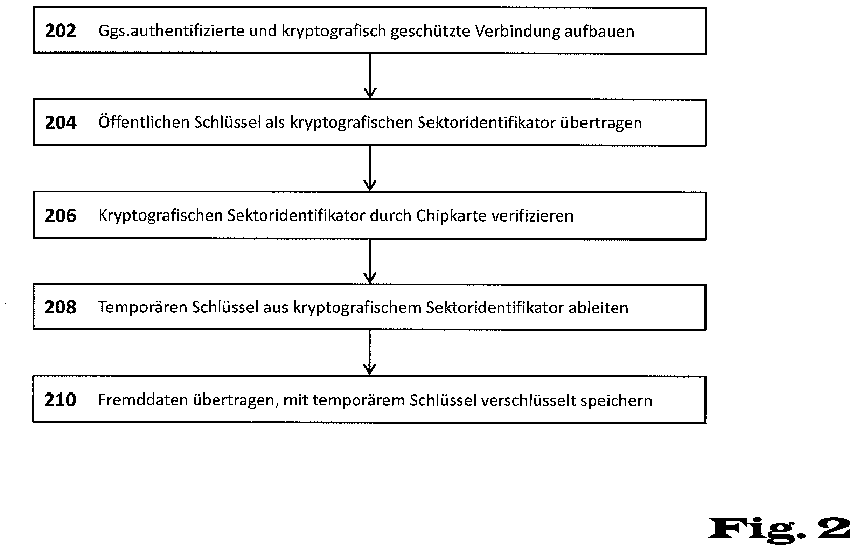

Ein grundlegendes bevorzugtes exemplarisches Verfahren zum Zugriffsschutz beim Schreiben von Fremddaten in den nichtflüchtigen Speicher eines Tokens veranschaulicht das Blockdiagramm in Fig. 2.

In einem einleitenden Abschnitt 202 des exemplarischen Verfahrens wird zwischen dem Token 110 und dem Fremddaten-Anbieter-Computer 130 ein Challenge-Response-Protokoll zur gegenseitigen Authentifizierung über die externe Schnittstelle 113 durchgeführt. Mit der Authentifizierung kann außerdem zweckmäßig eine kryptografisch geschützte Verbindung hergestellt werden, um möglichen Angreifern ein Abhören und/oder Verfälschen der Kommunikation über die externe Schnittstelle 113 des Tokens 110 zu erschweren.

In einem weiteren Abschnitt 204 des grundlegenden exemplarischen Verfahrens sendet der Fremddaten-Anbieter-Computer 130 einen öffentlichen Schlüssel als kryptografischen Sektoridentifikators 134 an den Token 110 über die geschützte Verbindung und die externe Schnittstelle 113. Es kann vorgesehen sein, dass der Token an dieser Stelle als Voraussetzung für die Fortsetzung die Gültigkeit des kryptografischen Sektoridentifikators und insbesondere des öffentlichen Schlüssels prüft. Dazu kann der Token vorzugsweise von dem Kartenherausgeber mit einem kryptografischen Algorithmus oder einem kryptografischen Parameter für einen solchen Algorithmus ausgestattet sein. In der exemplarischen Situation prüft der Token 110 die die Gültigkeit des öffentlichen Schlüssels mit einem Prüfschlüssel.

In einem weiteren Abschnitt 206 des grundlegenden exemplarischen Verfahrens erzeugt vorzugsweise die privilegierte Applikation 115 des Tokens 110 aus dem übertragenen kryptografischen Sektoridentifikators 136 einen temporären Schlüssel zum Verschlüsseln der zu speichernden Fremddaten.

In einem weiteren Abschnitt 208 des grundlegenden exemplarischen Verfahrens überträgt der Fremddaten-Anbieter-Computer 130 die zu schreibenden Fremddaten über die externe Schnittstelle 113 zur Speicherung in dem nichtflüchtigen Speicher 112.

In einem abschließenden Abschnitt 210 des grundlegenden exemplarischen Verfahrens verschlüsselt vorzugsweise die privilegierte Applikation die vom Fremddaten-Anbieter-Computer 130 übertragenen Fremddaten mit dem temporären Schlüssel und speichert die verschlüsselten Fremddaten in dem nichtflüchtigen Speicher 112.

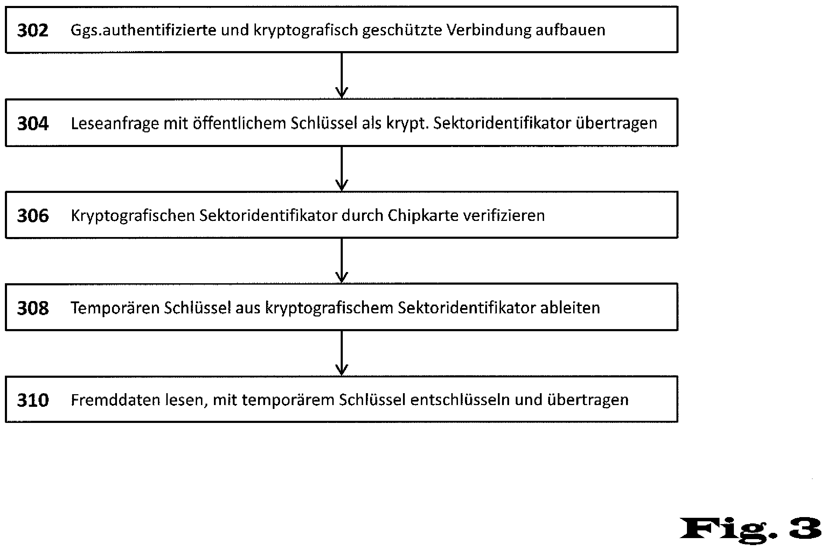

Eine bevorzugte Möglichkeit zur Erweiterung des grundlegenden exemplarischen Verfahrens für den Zugriffsschutz beim Lesen von Fremddaten aus dem nichtflüchtigen Speicher eines Tokens veranschaulicht das Blockdiagramm in Fig. 3.

In einem einleitenden Abschnitt 302 der bevorzugten Möglichkeit zur Erweiterung des grundlegenden exemplarischen Verfahrens wird zwischen dem Token 110 und einem Fremddaten-Verwender-Computer 140 zunächst ein Protokoll zur gegenseitigen Authentifizierung über die externe Schnittstelle 113 ausgeführt. Auch diese Authentifizierung kann vorzugsweise als Challenge-Response-Protokoll ausgestaltet sein. Mit dieser Authentifizierung kann außerdem zweckmäßig eine kryptografisch geschützte Verbindung hergestellt werden, um möglichen Angreifern ein Abhören und/oder Verfälschen der Kommunikation über die externe Schnittstelle 113 des Tokens 110 zu erschweren.

In einem weiteren Abschnitt 304 der bevorzugten Möglichkeit zur Erweiterung des grundlegenden exemplarischen Verfahrens überträgt der Fremddaten-Verwender-Computer 140 eine Leseanfrage und einen kryptografischen Sektoridentifikator 144 an den Token 110 über die authentifizierte Verbindung und die externe Schnittstelle 113.

In einem weiteren Abschnitt 306 der bevorzugten Möglichkeit zur Erweiterung des grundlegenden exemplarischen Verfahrens verifiziert vorzugsweise die privilegierte Applikation 115 des Tokens 110 die Gültigkeit des übertragenen kryptografischen Sektoridentifikators 144 als Voraussetzung für dessen Verarbeitung zur Erzeugung des temporären Schlüssels.

In einem weiteren Abschnitt 308 der bevorzugten Möglichkeit zur Erweiterung des grundlegenden exemplarischen Verfahrens erzeugt die privilegierte Applikation 115 des Tokens 110 aus dem kryptografischen Sektoridentifikator einen temporären Schlüssel.

In einem abschließenden Abschnitt 310 der bevorzugten Möglichkeit zur Erweiterung des grundlegenden exemplarischen Verfahrens liest der Token die durch die Leseanfrage bezeichneten verschlüsselten Fremddaten aus dem nicht-flüchtigen Speicher. Ferner entschlüsselt der Token die gelesenen und verschlüsselten Fremddaten mit dem temporären Schlüssel. Die damit wiederhergestellten Fremddaten überträgt der Token schließlich an den Fremddaten-Verwender-Computer 140 über die externe Schnittstelle 113.

### Bezugszeichenliste

- 110: Token
- 111: Prozessor
- 112: Nichtflüchtiger Speicher
- 113: Externe Schnittstelle
- 114: Betriebssystem
- 115: Privilegierte Applikation
- 116, 117: Fremddaten
- 116.1, 117.1: Prüfsummen
- 118: Prüfschlüssel
- 119: Freier Speicher
- 120: Terminal-Computer
- 122: Persönlicher Computer
- 124: Schnittstelle
- 126: Lesegerät
- 130: Fremddaten-Anbieter-Computer
- 132: Authentifizierungseinrichtung
- 134: Fremddaten-Speicher
- 136: Öffentlicher Sektor Schlüssel
- 140: Fremddaten-Verwender-Computer
- 142: Authentifizierungseinrichtung
- 144: Öffentlicher Sektor Schlüssel
- 150: Netzwerk
- 202-210, 302-310: Schritte

## Patentansprüche

1. Verfahren zum Zugriffsschutz für Fremddaten (116, 117, 119) im nichtflüchtigen Speicher (112) eines Tokens (110) in Bezug auf eine externe Schnittstelle (113) des Tokens (110), umfassend das:
- Durchführen eines Protokolls zwischen dem Token (110) und einem Fremddaten-Anbieter-Computer (130) zur gegenseitigen Authentifizierung über die externe Schnittstelle (113);
- Übertragen eines kryptografischen Sektoridentifikators (134) von dem einen Fremddaten-Anbieter-Computer (130) an den Token (110) über die externe Schnittstelle (113);
- Erzeugen eines temporären Schlüssels aus dem übertragenen kryptografischen Sektoridentifikators (136) durch den Token (110);
- Übertragen von Fremddaten von dem einen Fremddaten-Anbieter-Computer (130) über die externe Schnittstelle (113) zur Speicherung in dem nichtflüchtigen Speicher (112);
- Verschlüsseln der Fremddaten mit dem temporären Schlüssel durch den Token (110) und Speichern der verschlüsselten Fremddaten in dem nichtflüchtigen Speicher (112).

2. Verfahren nach einem der vorangehenden Ansprüche, worin weiterhin durch den Token (110) eine Prüfsumme (116.1, 117.1) der übertragenen Fremddaten berechnet und in Zuordnung zu den verschlüsselten Fremddaten gespeichert wird.

3. Verfahren nach einem der vorangehenden Ansprüche, weiterhin umfassend das:
- Durchführen eines Protokolls zwischen dem Token (110) und einem Fremddaten-Verwender-Computer (140) zur gegenseitigen Authentifizierung über die externe Schnittstelle (113);
- Übertragen einer Leseanfrage und eines kryptografischen Sektoridentifikators (144) von dem Fremddaten-Verwender-Computer (140) an den Token (110) über die externe Schnittstelle (113);
- Verifizieren der Gültigkeit des übertragenen kryptografischen Sektoridentifikators (144) durch den Token (110) als Voraussetzung für dessen Verarbeitung;
- Erzeugen eines temporären Schlüssels aus dem kryptografischen Sektoridentifikators (144) durch den Token (110);
- Lesen der durch die Leseanfrage bezeichneten verschlüsselten Fremddaten (116, 117) aus dem nichtflüchtigen Speicher (112), Entschlüsseln der verschlüsselten Fremddaten (116, 117) mit dem temporären Schlüssel durch den Token (110) und Übertragen der Fremddaten an den Fremddaten-Verwender-Computer (140) über die externe Schnittstelle (113).

4. Verfahren nach Anspruch 2 und 3, worin weiterhin als Voraussetzung für die Übertragung der Fremddaten an den Fremddaten-Verwender-Computer (140) nach dem Lesen und Entschlüsseln der Fremddaten daraus eine Prüfsumme berechnet und deren Übereinstimmung mit der in der Zuordnung zu den Fremddaten (116, 117) gespeicherten Prüfsumme (116.1, 117.1) geprüft wird.

5. Verfahren nach Anspruch 4, worin die Leseanfrage unspezifisch ist und Fremddaten (116, 117) nur insoweit an den Fremddaten-Verwender-Computer (140) übertragen werden, wie die Bedingung an die Prüfsumme (116.1, 117.1) erfüllt ist.

6. Verfahren nach einem der Ansprüche 1 bis 5, worin der kryptografische Sektoridentifikator ein öffentlicher Schlüssel eines asymmetrischen Schlüsselpaars (136, 144) ist.

7. Verfahren nach einem der Ansprüche 1 bis 5, worin der temporäre Schlüssel durch eine kryptografische Einwegoperation aus dem übertragenen kryptografischen Sektoridentifikator und einem geheimen Schlüssel des Tokens (110) erzeugt wird und/oder worin der temporäre Schlüssel durch ein Diffie-Hellman-Schlüsselerzeugungsverfahren erhalten wird.

8. Verfahren nach einem der Ansprüche 1 bis 5, worin der kryptografische Sektoridentifikator ein privater Schlüssel eines asymmetrischen Schlüsselpaars ist, der unverändert als temporärer Schlüssel verwendet wird.

9. Verfahren nach einem der vorangehenden Ansprüche, worin weiterhin die Gültigkeit des kryptografischen Sektoridentifikators (136) durch den Token (110) als Voraussetzung für dessen Verarbeitung bei der Erzeugung des temporären Schlüssels geprüft wird.

10. Token (110) mit einer externen Schnittstelle (113), weiterhin aufweisend einen nichtflüchtigen Speicher (112) und Einrichtungen zum Zugriffsschutz auf enthaltene Fremddaten (116, 117, 118), die ausgebildet sind zum:
- Durchführen eines Protokolls zum Aufbau einer gegenseitig authentifizierten Verbindung über die externe Schnittstelle (113);
- Empfangen eines kryptografischen Sektoridentifikators über die gegenseitig authentifizierte Verbindung;
- Erzeugen eines temporären Schlüssels aus dem kryptografischen Sektoridentifikators;
- Empfangen von Fremddaten über die externe Schnittstelle (113) zur Speicherung in dem nichtflüchtigen Speicher (112) über die gegenseitig authentifizierte Verbindung; und
- Verschlüsseln der Fremddaten mit dem temporären Schlüssel und Speichern der verschlüsselten Fremddaten (116, 117) in dem nichtflüchtigen Speicher (112).

11. Token nach Anspruch 10, weiterhin aufweisend Einrichtungen zum Verifizieren der Gültigkeit des empfangenen kryptografischen Sektoridentifikators als Voraussetzung für dessen Verarbeitung.

12. Token nach Anspruch 10 oder11, weiterhin aufweisend Einrichtungen zum Berechnen einer Prüfsumme (111) in funktionalem Zusammenhang mit der Verschlüsselung von Fremddaten und zum Speichern der Prüfsumme (116.1, 117.1) in Zuordnung zu der Speicherung der Fremddaten (116, 117).

13. Token nach einem der Ansprüche 10 bis12, weiterhin aufweisend Einrichtungen zum:
- Empfangen einer Leseanfrage über die gegenseitig authentifizierte Verbindung;
- Lesen der durch die Leseanfrage bezeichneten Fremddaten (116, 117) aus dem nichtflüchtigen Speicher (112), Entschlüsseln der Fremddaten mit dem temporären Schlüssel durch den Token (110) und Übertragen der entschlüsselten Fremddaten über die gegenseitig authentifizierte Verbindung.

14. Token nach Anspruch13, worin weiterhin als Voraussetzung für die Übertragung der Fremddaten über die gegenseitig authentifizierte Verbindung nach dem Lesen und Entschlüsseln der verschlüsselten Fremddaten daraus eine Prüfsumme berechnet und deren Übereinstimmung mit der in der Zuordnung zu den Fremddaten (116, 117) gespeicherten Prüfsumme (116.1, 117.1) geprüft wird.

15. Token nach einem der Ansprüche 10 bis 14, wobei der temporäre Schlüssel durch eine kryptografische Einwegoperation, insbesondere durch eine Hashfunktion oder ein Diffie-Hellman-Schlüsselerzeugungsverfahren, aus dem empfangenen kryptografischen Sektoridentifikator (136, 144) und einem geheimen Schlüssel des Tokens (110) erzeugt wird.

## Claims

1. A method for access protection for external data (116, 117, 119) in the non-volatile memory (112) of a token (110) in relation to an external interface (113) of the token (110), comprising the steps of:
- carrying out a protocol between the token (110) and an external data host computer (130) for mutual authentication via the external interface (113);
- transmitting a cryptographic sector identifier (134) from the one external data host computer (130) to the token (110) via the external interface (113);
- generating a temporary key from the transmitted cryptographic sector identifier (136) by the token (110);
- transmitting external data from the one external data host computer (130) via the external interface (113) for storage in the non-volatile memory (112); and
- encrypting the external data using the temporary key by means of the token (110), and storing the encrypted external data in the non-volatile memory (112).

2. The method according to the preceding claim, wherein furthermore a checksum (116.1, 117.1) of the transmitted external data is calculated by the token (110) and is stored in allocation to the encrypted external data.

3. The method according to either one of the preceding claims, furthermore comprising the steps of:
- carrying out a protocol between the token (110) and an external data user computer (140) for mutual authentication via the external interface (113);
- transmitting a read request and a cryptographic sector identifier (144) from the external data user computer (140) to the token (110) via the external interface (113);
- verifying the validity of the transmitted cryptographic sector identifier (144) by means of the token (110) as a precondition for the processing thereof;
- generating a temporary key from the cryptographic sector identifier (144) by the token (110);
- reading the encrypted external data (116, 117) specified by the read request from the non-volatile memory (112), decrypting the encrypted external data (116, 117) using the temporary key by means of the token (110), and transmitting the external data to the external data user computer (140) via the external interface (113).

4. The method according to claim 2 and 3, wherein furthermore, as a precondition for the transmission of the external data to the external data user computer (140), a checksum is calculated from the external data after the reading and decrypting of same, and it is checked whether said checksum matches the checksum (116.1, 117.1) stored in the allocation to the external data (116, 117).

5. The method according to claim 4, wherein the read request is unspecific and external data (116, 117) are transmitted to the external data user computer (140) only insofar as the condition for the checksum (116.1, 117.1) is satisfied.

6. The method according to any one of claims 1 to 5, wherein the cryptographic sector identifier is a public key of an asymmetric key pair (136, 144).

7. The method according to any one of claims 1 to 5, wherein the temporary key is generated by a cryptographic one-way operation from the transmitted cryptographic sector identifier and a secret key of the token (110), and/or wherein the temporary key is obtained by a Diffie-Hellman key generation method.

8. The method according to any one of claims 1 to 5, wherein the cryptographic sector identifier is a private key of an asymmetric key pair which is used unchanged as temporary key.

9. The method according to any one of the preceding claims, wherein furthermore the validity of the cryptographic sector identifier (136) is checked by the token (110) as a precondition for the processing of same during the generation of the temporary key.

10. A token (110) with an external interface (113), furthermore having a non-volatile memory (112) and devices for access protection for contained external data (116, 117, 118) which are designed to:
- carry out a protocol for establishing a mutually authenticated connection via the external interface (113);
- receive a cryptographic sector identifier via the mutually authenticated connection;
- generate a temporary key from the cryptographic sector identifier;
- receive external data via the external interface (113) for storage in the non-volatile memory (112) via the mutually authenticated connection; and
- encrypt the external data using the temporary key and store the encrypted external data (116, 117) in the non-volatile memory (112).

11. The token according to claim 10, furthermore comprising devices for verifying the validity of the received cryptographic sector identifier as a precondition for the processing of same.

12. The token according to claim 10 or 11, furthermore comprising devices for calculating a checksum (111) in functional correlation with the encryption of external data and for storing the checksum (116.1, 117.1) in allocation to the storage of the external data (116, 117).

13. The token according to any one of claims 10 to 12, further comprising devices for:
- receiving a read request via the mutually authenticated connection;
- reading the external data (116, 117) specified by the read request from the non-volatile memory (112), decrypting the external data using the temporary key by means of the token (110), and transmitting the decrypted external data via the mutually authenticated connection.

14. The token according to claim 13, wherein furthermore, as a precondition for the transmission of the external data via the mutually authenticated connection, a checksum is calculated from the external data after the reading and decrypting of same, and it is checked whether said checksum matches the checksum (116.1, 117.1) stored in the allocation to the external data (116, 117).

15. The token according to any one of claims 10 to 14, wherein the temporary key is generated by a cryptographic one-way operation, in particular by a hash function or a Diffie-Hellman key generation method, from the received cryptographic sector identifier (136, 144) and a secret key of the token (110).

## Revendications

1. Procédé de protection de l'accès à des données étrangères (116, 117, 119) dans la mémoire (112) non volatile d'un jeton (110) par rapport à une interface externe (113) du jeton (110), comprenant :
- l'exécution d'un protocole entre le jeton (110) et un ordinateur de fournisseur de données étrangères (130) pour l'authentification réciproque par le biais de l'interface externe (113) ;
- la transmission d'un identificateur de secteur (134) cryptographique de l'ordinateur de fournisseur de données étrangères (130) au jeton (110) par le biais de l'interface externe (113) ;
- la création d'une clé temporaire à partir de l'identificateur de secteur (136) cryptographique transmis par le jeton (110 ;
- la transmission de données étrangères par l'ordinateur de fournisseur de données étrangères (130) par le biais de l'interface externe (113) pour le stockage dans la mémoire (112) non volatile ;
- le chiffrement des données étrangères avec la clé temporaire par le jeton (110) et le stockage des données étrangères chiffrées dans la mémoire (112) non volatile.

2. Procédé selon l'une des revendications précédentes, dans lequel, en outre, une somme de contrôle (116.1, 117.1) des données étrangères transmises est calculée par le jeton (110) et est stockée en association avec les données étrangères chiffrées.

3. Procédé selon l'une des revendications précédentes, comprenant en outre :
- l'exécution d'un protocole entre le jeton (110) et un ordinateur d'utilisateur de données étrangères (140) pour l'authentification réciproque par le biais de l'interface externe (113) ;
- la transmission d'une demande de lecture et d'un identificateur de secteur (144) cryptographique de l'ordinateur d'utilisateur de données étrangères (140) au jeton (110) par le biais de l'interface externe (113) ;
- la vérification de la validité de l'identificateur de secteur (144) cryptographique transmis par le jeton (110) en tant que condition préalable pour son traitement ;
- la création d'une clé temporaire à partir de l'identificateur de secteur (144) cryptographique par le jeton (110) ;
- la lecture des données étrangères (116, 117) chiffrées concernées par la demande de lecture à partir de la mémoire (112) non volatile, le déchiffrement des données étrangères (116, 117) chiffrées avec la clé temporaire par le jeton (110) et la transmission des données étrangères à l'ordinateur d'utilisateur de données étrangères 140) par le biais de l'interface externe (113).

4. Procédé selon la revendication 2 et la revendication 3, dans lequel, en outre, une somme de contrôle est calculée à partir et en tant que condition préalable pour la transmission des données étrangères à l'ordinateur d'utilisateur de données étrangères (140) après la lecture et le déchiffrement des données étrangères et sa concordance avec la somme de contrôle (116.1, 117.1) stockée dans l'association aux données étrangères (116, 117) est vérifiée.

5. Procédé selon la revendication 4, dans lequel la demande de lecture est non spécifique et des données étrangères (116, 117) ne sont transmises à l'ordinateur d'utilisateur de données étrangères (140) que dans la mesure où la condition concernant la somme de contrôle (116.1, 117.1) est vérifiée.

6. Procédé selon l'une des revendications 1 à 5, dans lequel l'identificateur de secteur cryptographique est une clé publique d'une paire de clés (136, 144) asymétrique.

7. Procédé selon l'une des revendications 1 à 5, dans lequel la clé temporaire est générée par une opération unidirectionnelle cryptographique à partir de l'identificateur de secteur cryptographique transmis et d'une clé privée du jeton (110) et/ou dans lequel la clé temporaire est obtenue par un procédé de génération de clé de Diffie-Hellman.

8. Procédé selon l'une des revendications 1 à 5, dans lequel l'identificateur de secteur cryptographique est une clé privée d'une paire de clés asymétrique qui est employée en tant que clé temporaire non modifiée.

9. Procédé selon l'une des revendications précédentes, dans lequel, en outre, la validité de l'identificateur de secteur (136) cryptographique est vérifiée par le jeton (110) en tant que condition préalable pour son traitement lors de la création de la clé temporaire.

10. Jeton (110) doté d'une interface externe (113), présentant en outre une mémoire (112) non volatile et des dispositifs permettant la protection de l'accès à des données étrangères (116, 117, 118) obtenues, qui sont conçus pour :
- l'exécution d'un protocole permettant l'établissement d'une liaison authentifiée de manière réciproque par le biais d'une interface externe (113) ;
- la réception d'un identificateur de secteur cryptographique par le biais de la liaison authentifiée de manière réciproque ;
- la création d'une clé temporaire à partir de l'identificateur de secteur cryptographique ;
- la réception de données étrangères par le biais de l'interface externe (113) pour le stockage dans la mémoire (112) non volatile par le biais de la liaison authentifiée de manière réciproque ; et
- le chiffrement des données étrangères avec la clé temporaire et le stockage des données étrangères (116, 117) chiffrées dans la mémoire (112) non volatile.

11. Jeton selon la revendication 10, présentant en outre des dispositifs permettant la vérification de la validité de l'identificateur de secteur cryptographique reçu en tant que condition préalable pour son traitement.

12. Jeton selon la revendication 10 ou la revendication 11, présentant en outre des dispositifs permettant le calcul d'une somme de contrôle (111) en contexte fonctionnel avec le chiffrement de données étrangères et le stockage de la somme de contrôle (116.1, 117.1) en association avec le stockage des données étrangères (116, 117).

13. Jeton selon l'une des revendications 10 à 12, présentant en outre des dispositifs pour :
- la réception d'une demande de lecture par le biais de la liaison authentifiée de manière réciproque ;
- la lecture des données étrangères (116, 117) concernées par la demande de lecture à partir de la mémoire (112) non volatile, le déchiffrement des données étrangères avec la clé temporaire par le jeton (110) et la transmission des données étrangères déchiffrées par le biais de la liaison authentifiée de manière réciproque.

14. Jeton selon la revendication 13, dans lequel, en outre, une somme de contrôle est calculée en tant que condition préalable pour la transmission des données étrangères par le biais de la liaison authentifiée de manière réciproque après la lecture et le déchiffrement des données étrangères chiffrées à partir de celle-ci, et dont la concordance avec la somme de contrôle (116.1, 117.1) stockée dans l'association avec les données étrangères (116, 117) est vérifiée.

15. Jeton d'après l'une des revendications 10 à 14, dans lequel la clé temporaire est crée par une opération unidirectionnelle cryptographique, notamment par une fonction de hachage ou un procédé de création de clé de Diffie-Hellman, à partir de l'identificateur de secteur (136, 144) cryptographique reçu et d'une clé privée du jeton (110).
